(19) Europäisches Patentamt
European Patent Office
Office européen des brevets

(11) **EP 2 645 563 B1**

(12) **EUROPÄISCHE PATENTSCHRIFT**

(45) Veröffentlichungstag und Bekanntmachung des Hinweises auf die Patenterteilung:
**24.07.2019 Patentblatt 2019/30**

(51) Int Cl.:
*H02P 27/14* *(2006.01)*      *G05B 19/35* *(2006.01)*
*F03D 7/02* *(2006.01)*      *G05B 11/01* *(2006.01)*

(21) Anmeldenummer: **12161476.2**

(22) Anmeldetag: **27.03.2012**

(54) **Antriebssystem, Wind- oder Wasserkraftanlage mit einem Pitchsystem und Verfahren zum Betrieb eines Antriebssystems**

Drive system, wind or water power assembly with a pitch system and method for operating a drive system

Système d'entraînement, centrale hydroélectrique ou éolienne avec système de pas et procédé de fonctionnement de ce système d'entraînement

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**02.10.2013 Patentblatt 2013/40**

(73) Patentinhaber: **Moog Unna GmbH**
**59423 Unna (DE)**

(72) Erfinder:
• **Rösmann, Tobias**
**44263 Dortmund (DE)**
• **Pauli, Matthias**
**33181 Bad Wünnenberg (DE)**

(74) Vertreter: **Withers & Rogers**
**Withers & Rogers LLP**
**4 More London Riverside**
**London SE1 2AU (GB)**

(56) Entgegenhaltungen:
EP-A1- 0 534 242      DE-A1- 4 216 203
DE-A1- 4 341 868      US-A- 4 151 452
US-E- R E32 857

• **MOU HU ET AL: "Fault-Tolerant System Using 3-Value Logic Circuits", IEEE TRANSACTIONS ON RELIABILITY, IEEE SERVICE CENTER, PISCATAWAY, NJ, US, Bd. R-13, Nr. 2, 1. Juni 1987 (1987-06-01) , Seiten 227-231, XP011275448, ISSN: 0018-9529**
• **KENTAROH TOMITA ET AL: "Stabilization based on Ternary Valued PWM Control Input", DECISION AND CONTROL, 2006 45TH IEEE CONFERENCE ON, IEEE, PI, 1. Dezember 2006 (2006-12-01), Seiten 5483-5489, XP031082184, ISBN: 978-1-4244-0171-0**
• **GAO F ET AL: "Dual Z-source Inverter with Three-Level Reduced Common Mode Switching", THE 2006 IEEE INDUSTRY APPLICATIONS CONFERENCE FORTY-FIRST IAS ANNUAL MEETING, CONFERENCE RECORD OF, IEEE, PISCATAWAY, NJ, US, 1 October 2006 (2006-10-01), pages 619-626, XP031026094, DOI: 10.1109/IAS.2006.256591 ISBN: 978-1-4244-0364-6**
• **SATOSHI OGASAWARA ET AL: "A NOVEL CONTROL SCHEME OF A PARALLEL CURRENT-CONTROLLED PWM INVERTER", IEEE TRANSACTIONS ON INDUSTRY APPLICATIONS, IEEE SERVICE CENTER, PISCATAWAY, NJ, US, vol. 28, no. 5, 1 September 1992 (1992-09-01), pages 1023-1030, XP000311401, ISSN: 0093-9994, DOI: 10.1109/28.158825**

**EP 2 645 563 B1**

**Beschreibung**

Die Erfindung betrifft ein Antriebsystem mit einem Synchronmotor, einem Wechselrichter und einer Gleichspannungsquelle, wobei der Synchronmotor einen Positionssensor aufweist, durch den Positionssensor ein Ausgangssignal erzeugbar ist, durch die Gleichspannungsquelle dem Wechselrichter eine Gleichspannung zuführbar ist, die Gleichspannung durch den Wechselrichter in eine n-phasige Wechselspannung umwandelbar ist, wobei n eine ganze Zahl größer eins ist, der Wechselrichter über n Verbindungsleitungen mit dem Synchronmotor verbunden ist und der Synchronmotor mit der n-phasigen Wechselspannung betreibbar ist. Unter dem Begriff Positionssensor ist hierbei ein Sensor zu verstehen, durch den die Rotorposition, insbesondere die Winkelposition, des Rotors des Synchronmotors erfassbar ist. Der Positionssensor kann als integraler Bestandteil des Synchronmotors ausgebildet sein oder aber auch als ein separates Bauteil, welches, zur Erfüllung seiner Funktion als Positionssensor, direkt oder indirekt mit dem Rotor des Synchronmotors verbunden ist. Die n Verbindungsleitungen zwischen dem Synchronmotor und dem Wechselrichter können sowohl als einzelne Leitungen ausgebildet oder in einem n-adrigen Kabel zusammengefasst sein. Die Erfindung betrifft ferner ein Verfahren zum Betrieb eines Antriebssystems.

Aus dem Stand der Technik ist es bekannt Synchronmotoren mit einem als Vektorregelung bezeichneten Regelungsverfahren zu betreiben. Zur Durchführung einer Vektorreglung werden Informationen zur Rotorposition und zu den Strömen in den den Synchronmotor mit Energie versorgenden n Verbindungsleitungen benötigt. Im Rahmen dieses Regelungsverfahrens werden die Informationen zur Rotorposition und zu den Strömen in den n Verbindungsleitungen üblicherweise mittels verschiedener Transformationen verarbeitet. Hierzu zählen insbesondere die alpha/beta-Transformation, die auch als Clarke-Transformation bezeichnet wird, und die so genannte d/q-Transformation, die auch als Park-Transformation bekannt ist. Aufgrund der Komplexität der für die Vektorreglung notwendigen Transformationen ist eine leistungsfähige und somit kostentreibende Soft- und Hardware zur Durchführung dieses Regelungsverfahrens notwendig. Des Weiteren sind zur Gewinnung der Informationen zur Rotorposition und zu den Strömen in den den Synchronmotor mit Energie versorgenden n Verbindungsleitungen entsprechende Sensoren notwendig. Die hierdurch sich ergebende Komplexität erhöht die Anfälligkeit des gesamten Regelungsverfahrens.

Die Erfindung betrifft ferner eine Wind- oder Wasserkraftanlage mit einem Pitchsystem zur Verstellung des Pitchwinkels zumindest eines Rotorblattes der Wind- oder Wasserkraftanlage. Bei modernen Windenergieanlagen sind die Rotorblätter in der Regel um ihre Längsachsen drehverstellbar ausgebildet. Hierdurch lässt sich durch Einstellung des als Pitchwinkel bezeichneten Drehwinkels der Rotorblätter um ihre Längsachsen die Energieaufnahme aus dem Wind verändern. Zur Einstellung des Pitchwinkels wird ein Pitchsystem verwendet, welches entweder elektrisch oder hydraulisch ausgebildet ist. Vorzugsweise weist bei elektrischen Pitchsystemen das Pitchsystem je Rotorblatt ein Antriebssystem auf, welches das entsprechende Rotorblatt um seine Längsachse zu drehen vermag.

Die DE 10 2009 046 883 A1 offenbart ein Pitchantriebsvorrichtung für eine Wind-oder Wasserkraftanlage umfassend einen Synchronmotor und einer Motorbetrieb-Umschalteinheit für die Umschaltung zwischen einem Normalbetrieb und einem Notbetrieb. Hierbei ist der Synchronmotor im Normalbetrieb mittels einer Wechsel- oder Drehstromversorgung und im Notbetrieb mittels einer Gleichstromversorgung betreibbar.

Aus EP 1 217 722 ist ein Verfahren zum Ansteuern eines Dreiphasen-Schrittmotors bekannt, bei dem die Schritte des Schrittmotors dadurch gesteuert werden, indem die Spulen des Schrittmotors nacheinander in einem ersten Zustand, der einer Stromversorgung von einer ersten Anzahl von Spulen entspricht, und in einem zweiten Zustand gebracht werden, der einer Stromversorgung einer zweiten Anzahl von Spulen entspricht, und bei dem eine derartige Versorgung der Spulen des Schrittmotors durchgeführt wird, dass die Spulen des Schrittmotors in dem ersten und in dem zweiten Zustand von Strömen durchflossen werden, die ein Drehmoment von im wesentlichen identischen Wert erzeugt. Hierbei umfasst das Verfahren eine Schätzung des Drehmomentbedarfs, bei welchem eine oder zwei der Spulen des Schrittmotors mit Strom versorgt werden, und indem die Spannung an einer Endklemme einer nicht versorgten Spule des Schrittmotors gemessen wird. Daran anschließend werden Pulsweitenverhältnisse von Versorgungssignalen des Motors entsprechend dem geschätzten Drehmomentbedarf angepasst.

Damit ist es die Aufgabe der Erfindung, ein Antriebssystem und eine Wind- oder Wasserkraftanlage mit einem Pitchsystem anzugeben, die besonders robust und kostengünstig sind, sowie ein Verfahren zum Betrieb eines Antriebssystems anzugeben, das besonders einfach und sicher ist.

Die zuvor hergeleitete und aufgezeigte Aufgabe ist ausgehend von dem eingangs beschriebenen Antriebssystem dadurch gelöst, dass das Antriebssystem ein Logikelement aufweist, das Ausgangssignal des Positionssensors dem Logikelement zuführbar ist, durch das Logikelement bei Empfang des Ausgangssignals genau ein dem Ausgangssignal korrespondierendes Steuersignal erzeugbar ist, die Anzahl der verschiedenen erzeugbaren Steuersignale höchstens $3^n - 2^{n+1} + 1$ beträgt, das Steuersignal dem Wechselrichter zuführbar ist und der Wechselrichter durch das Steuersignal steuerbar ist.

Der Wechselrichter kann ausgehend von der ihm von der Gleichspannungsquelle zur Verfügung gestellten Gleichspannung jede der n Verbindungsleitungen entweder mit dem positiven Potential oder dem negativen Potential der Gleichspannungsquelle verbinden oder von den Potentialen der Gleichspannungsquelle trennen. Die zuvor beschriebene Verbindung oder Trennung erfolgt im Stand der Technik in der Regel mittels schneller leistungselektronischer Halbleiterbauelemente, z. B. IGBTs. Das Steuersignal beinhaltet hierbei die Information, welche der n Verbindungsleitungen mit dem positiven Potential der Gleichspannungsquelle verbunden werden soll, welche mit dem negativen Potential der Gleichspannungsquelle verbunden werden soll und welche der n Verbindungsleitungen von den Potentialen der Gleichspannungsquelle getrennt werden soll.

Prinzipiell ist eine Vielzahl an Steuersignalen denkbar, jedoch ergibt sich erfindungsgemäß das überraschende Ergebnis, dass die Anzahl der zum Antrieb des Synchronmotors nutzbaren Steuersignale eindeutig beziffert werden kann. Ein zum Antrieb des Synchronmotors nutzbares Steuersignal ist hierbei ein Signal, das den Wechselrichter derart ansteuert, dass in den n Motorwicklungen des Synchronmotors ein spannungsbildender Zustand erreicht wird. Als spannungsbildender Zustand wird ein Zustand bezeichnet, bei dem wenigstens an einer der n Motorwicklungen eine Spannung anliegt. Hiervon zu unterscheiden sind die spannungsfreien Zustände, bei denen an keiner der n Motorwicklungen eine Spannung anliegt. Triviale Beispiele für spannungsfreie Zustände sind beispielsweise Zustände, bei denen alle Verbindungsleitungen mit demselben Potential der Gleichspannungsquelle verbunden sind oder alle Verbindungsleitungen von den Potentialen der Gleichspannungsquelle getrennt sind. Für den Betrieb des Synchronmotors sind im Wesentlichen nur die spannungsbildenden Zustände geeignet, da nur diese ein Drehmoment erzeugen können.

Der notwendige Informationsgehalt eines Steuersignals entspricht dem einer n-stelligen Ternärzahl, da für jede der n Verbindungsleitungen genau drei verschiedene Verbindungszustände möglich sind. In Analogie zum Binärsystem und der in der Digitaltechnik üblichen Bezeichnung für den Informationsgehalt einer Stelle einer Binärzahl, dem "Bit", wird die Bezeichnung "Trit" als Bezeichnung für den Informationsgehalt einer Stelle einer Ternärzahl verwendet. Demnach entspricht der notwendige Informationsgehalt eines Steuersignals somit n Trit. Besonders vorteilhaft ist es daher, wenn der Positionssensor über n Signalleitungen mit dem Logikelement verbunden ist und über jede der n Signalleitungen ein Teilausgangssignal dem Logikelement zuführbar ist, wobei jedes der n Teilausgangssignale drei verschiedene Zustände annehmen kann. Über jede der n Signalleitung wird in diesem Fall die Information einer Stelle der Ternärzahl, d. h. genau ein Trit, übermittelt. Der Vorteil dieser erfindungsgemäßen Ausgestaltung liegt darin, dass die von den n Signalleitungen übertragene Information in einer Form übertragen wird, in der sie besonders einfach weiterverarbeitet werden kann, da sich die Funktionsweise des anzusteuernden Wechselrichters in der Übertragungsart widerspiegelt.

Die Anzahl der spannungsbildenden Zustände A lässt sich wie im Folgenden dargestellt berechnen. Ausgangspunkt ist die Überlegung, dass ein spannungsbildender Zustand nur dann vorliegt, wenn wenigstens eine der n Verbindungsleitung mit dem positiven Potential der Gleichspannungsquelle verbunden ist und wenigstens eine der n Verbindungsleitung mit dem negativen Potential der Gleichspannungsquelle verbunden ist. Folglich ergibt sich die Anzahl der spannungsbildenden Zustände A als Summe aller Zustände für die die zuvor beschriebene Bedingung erfüllt ist. Ferner lässt sich die Anzahl der spannungsbildenden Zustände A auch ausdrücken als die Differenz zwischen der Anzahl aller möglichen Zustände und der Anzahl der Zustände, die spannungsfrei sind. Die Anzahl der spannungsfreien Zustände entspricht der Summe der Zustände, bei denen keine der n Verbindungsleitungen mit dem negativen Potential der Gleichspannungsquelle verbunden ist, und der Zustände, bei denen keine der n Verbindungsleitungen mit dem positiven Potential der Gleichspannungsquelle verbunden ist, abzüglich der Anzahl der Zustände, bei denen keine der n Verbindungsleitungen mit irgendeinem der zwei verschiedenen Potentiale der Gleichspannungsquelle verbunden ist. Für die Anzahl der spannungsbildenden Zustände A ergibt sich somit folgender Zusammenhang:

$$A(n) = 3^n - \left(2^n + 2^n - 1\right) = 3^n - 2^{n+1} + 1$$

Die vorhergehende Berechnung der Anzahl der spannungsbildenden Zustände A ist sowohl für eine Sternschaltung als auch für eine n-Eck-Schaltung der n Motorwicklungen gültig. N-Eck-Schaltung bezeichnet hierbei, in Analogie zu der üblichen Bezeichnung Dreiecksschaltung, die Verallgemeinerung der Dreiecksschaltung auf n Motorwicklungen, d. h. eine Schaltung, bei der die n Motorwicklungen so miteinander verknüpft sind, dass sie eine geschlossene Kette bilden und an jedem Verknüpfungspunkt zwischen zwei Motorwicklungen eine der n Verbindungsleitungen angeschlossen ist. Für den Fall n = 3 ergibt sich für die Anzahl der spannungsbildenden Zustände A beispielsweise ein Wert von 12.

Das Logikelement übersetzt das Ausgangssignal des Positionssensors in ein Steuersignal für den Wechselrichter. Hierzu ist das Logikelement insbesondere in Form eines reinen Hardwareelements ausgestaltet. In diesem Hardwareelement ist die zur Übersetzung des Ausgangssignals des Positionssensors in ein Steuersignal für den Wechselrichter notwendige Logik physikalisch hinterlegt, d. h. "hart verdrahtet". Die Vorteile eines Hardwareelements liegen in der besonderen Robustheit von Hardwareelementen. Alternativ kann es vorteilhaft sein das Logikelement durch eine in einem programmierbaren Logikbaustein hinterlegte, insbesondere sichere, Software auszubilden. Im Gegensatz zu reinen Hardwareelementen kann ein programmierbarer Logikbaustein zur Anpassung der Logik einfach neu programmiert und muss nicht ausgetauscht werden. Je nachdem ob die spezifische Anwendung eher eine besondere Robustheit oder eine einfache und flexible Reprogrammierbarkeit erfordert, bietet sich ein reines Hardwareelement oder ein programmierbarer Logikbaustein an. Sichere Software bedeutet hierbei, dass die Software den Anforderungen an sicherheitsbezogene Software genügt. Diese Anforderungen an sicherheitsbezogene Software sind der ISO 13849-1:2006-11, Abschnitt 4.6 zu entnehmen.

Jedem Ausgangssignal des Positionssensors ist genau ein Steuersignal zugeordnet. Die von dem Logikelement ausgebbaren Steuersignale sind derart ausgestaltet, dass sie den Wechselrichter derart ansteuern, dass in den n Motorwicklungen des Synchronmotors ein spannungsbildender Zustand erreicht wird. Jedes der ausgebbaren Steuersignale steuert den Wechselrichter derart an, dass genau einer der spannungsbildenden Zustände erreicht wird. Im Ergebnis wird die Ansteuerung des Synchronmotors des erfindungsgemäßen Antriebssystems durch die Winkelposition des Synchronmotors selbst vorgegeben, denn die Winkelposition des Positionssensors legt das Ausgangssignal des Positionssensors fest. In Abhängigkeit vom Ausgangssignal des Positionssensors gibt das Logikelement ein dem Ausgangssignal des Positionssensors korrespondierendes Steuersignal aus, wobei dieses Steuersignal den Wechselrichter derart steuert, dass der dem Steuersignal entsprechende spannungsbildende Zustand erreicht wird.

Insbesondere ist es vorteilhaft, wenn die Anzahl der erzeugbaren Steuersignale kleiner ist als die Anzahl der spannungsbildenden Zustände A. D. h. der Synchronmotor kann entweder mit der vollständigen Anzahl der spannungsbildenden Zustände A oder einer Auswahl dieser Zustände betrieben werden, wobei die Anzahl der spannungsbildenden Zustände, die diese Auswahl umfasst, kleiner ist als A.

Gemäß einer vorteilhaften Weiterbildung der Erfindung ist vorgesehen, dass das Antriebssystem eine Steuerungseinrichtung aufweist und der Wechselrichter unmittelbar und/oder mittelbar über das Logikelement durch die Steuerungseinrichtung steuerbar ist. Hierbei kann insbesondere vorgesehen sein, dass das Logikelement nur in bestimmten Betriebsituationen, z. B. in Notsituationen, unabhängig von der Steuerungseinrichtung agieren kann und in anderen Betriebsituationen, die beispielsweise keine Notsituation darstellen, die Steuerungseinrichtung den Wechselrichter steuert. Eine derartige Notsituation kann beispielsweise dadurch gekennzeichnet sein, dass die Steuerungseinrichtung ausgefallen ist oder aufgrund eines während einer Selbstdiagnose oder einer externen Diagnose festgestellten Fehlers deaktiviert worden ist.

Eine vorteilhafte Ausgestaltung der Erfindung zeichnet sich dadurch aus, dass die Steuerungseinrichtung eine Strommesseinrichtung beinhaltet und durch die Strommesseinrichtung ein Stromfluss in den n Verbindungsleitungen erfassbar ist. Über die Strommesseinrichtung erhält die Steuerungseinrichtung Informationen über den Stromfluss in den n Verbindungsleitungen zwischen dem Wechselrichter und dem Synchronmotor. Des Weiteren kann es vorgesehen sein, dass die Steuerungseinrichtung über Leitungen mit dem Logikelement verbunden ist. Über diese Leitungen ist insbesondere das Ausgangssignal des Logikelements der Steuerungseinrichtung zuführbar. Gemäß einer besonders vorteilhaften Weiterbildung der Erfindung ist vorgesehen, dass die Steuerungseinrichtung eine sichere Steuerungssoftware aufweist. Hierbei bedeutet sichere Steuerungssoftware, dass die Steuerungssoftware den Anforderungen an sicherheitsbezogene Software genügt.

Eine weitere besonders vorteilhafte Weiterbildung der Erfindung umfasst, dass das Ausgangssignal des Positionssensors der Steuerungseinrichtung zuführbar ist. Hierzu ist die Steuerungseinrichtung über entsprechende Signalleitungen mit dem Positionssensor verbunden. Ausgehend von dem Ausgangssignal des Positionssensors kann die Steuerungseinrichtung die Position des Rotors des Synchronmotors berechnen. Darüber hinaus besteht die Möglichkeit, nach Empfang mehrerer Ausgangssignale, die Winkelgeschwindigkeit des Rotors des Synchronmotors zu berechnen. Die Ergebnisse dieser Berechnungen sind von der Steuerungseinrichtung, insbesondere an andere Steuerungseinrichtungen der Windenergieanlage ausgebbar.

Bei einer bevorzugten Ausgestaltung der Erfindung ist vorgesehen, dass n gleich drei ist. Diese Ausgestaltung entspricht dem im Stand der Technik gängigsten Fall, dass der Synchronmotor ein Dreiphasensynchronmotor ist, der mit Dreiphasenwechselstrom betrieben wird.

Gemäß einer weiteren bevorzugten Ausgestaltung der Erfindung ist vorgesehen, dass das Antriebssystem einen Notenergiespeicher aufweist und durch den Notenergiespeicher im Notfall eine Gleichspannung dem Wechselrichter zuführbar ist. Als Notenergiespeicher eignen sich vor allem Batterien oder Akkumulatoren, insbesondere aber auch Kondensatoren, wie zum Beispiel Ultrakondensatoren, häufig als Ultra-Caps bezeichnet. Durch derartige Notenergiespeicher wird gewährleistet, dass das erfindungsgemäße Antriebssystem auch bei Ausfall der Gleichspannungsquelle zumindest zeitweise mit Energie versorgt wird. Hierzu ist der Notenergiespeicher über Entkopplungsdioden mit den Verbindungsleitungen zwischen Gleichstromquelle und Wechselrichter verbunden.

Darüber hinaus ist es vorteilhaft, wenn die Gleichspannungsquelle durch einen Gleichrichter gebildet wird, der mit einer externen Wechselstromquelle verbindbar ist. Eine externe Wechselstromquelle kann insbesondere durch das Stromnetz gebildet werden. Durch eine Verbindung des Gleichrichters mit dem Stromnetz ist eine zuverlässige Energieversorgung des erfindungsgemäßen Antriebssystems sichergestellt. Gemäß einer weiteren bevorzugten Weiterbildung der Erfindung ist vorgesehen, dass der Wechselrichter durch einen H-Brückenwechselrichter gebildet wird.

Bei einer vorteilhaften Ausgestaltung der Erfindung ist vorgesehen, dass durch den Positionssensor höchstens $3^n - 2^{n+1} + 1$ verschiedene Ausgangssignale erzeugbar sind. Da die Anzahl der spannungsbildenden Zustände A begrenzt ist, ist es vorteilhaft die Anzahl der verschiedenen erzeugbaren Ausgangssignale ebenfalls einzuschränken. Hierdurch ergibt sich die Möglichkeit besonders einfach ausgestaltete Positionssensoren zu verwenden, die lediglich eine entsprechend begrenzte Auflösung erreichen. Hierdurch lassen sich die Kosten für den Positionssensor weiter reduzieren sowie die Robustheit des erfindungsgemäßen Antriebssystems weiter verbessern.

Die zuvor hergeleitete und aufgezeigte Aufgabe ist ausgehend von dem eingangs beschriebenen Verfahren zum Betrieb eines Antriebssystems dadurch gelöst, dass ein Antriebssystem nach einem der Ansprüche 1 bis 9 verwendet wird, wobei durch den Positionssensor ein Ausgangssignal erzeugt wird, das Ausgangssignal dem Logikelement zugeführt wird, das Logikelement bei Empfang des Ausgangssignals genau ein dem Ausgangssignal korrespondierendes Steuersignal erzeugt, wobei die Anzahl der verschiedenen erzeugten Steuersignale höchstens $3^n - 2^{n+1} + 1$ beträgt, das Steuersignal dem Wechselrichter zugeführt wird, der Wechselrichter durch das Steuersignal gesteuert wird, die Gleichspannungsquelle dem Wechselrichter eine Gleichspannung zuführt, die Gleichspannung durch den Wechselrichter in eine n-phasige Wechselspannung umgewandelt wird und der Synchronmotor mit der n-phasigen Wechselspannung betrieben wird.

Gemäß einer vorteilhaften Weiterbildung der Erfindung ist vorgesehen, dass das Antriebssystem eine Steuerungseinrichtung aufweist und der Wechselrichter durch die Steuerungseinrichtung mittelbar über das Logikelement und/oder unmittelbar gesteuert wird. Der Vorteil dieser Weiterbildung der Erfindung liegt insbesondere in der hierdurch gewonnen Flexibilität des Antriebssystems. Es kann nämlich insbesondere vorgesehen sein, dass das Logikelement nur in bestimmten Betriebsituationen, z. B. in Notsituationen, unabhängig von der Steuerungseinrichtung den Wechselrichter ansteuert und in anderen Betriebsituationen, die beispielsweise keine Notsituation darstellen, die Steuerungseinrichtung den Wechselrichter ansteuert, zum Beispiel durch eine Vektorregelung. Eine Notsituation kann beispielsweise dadurch gekennzeichnet sein, dass die Steuerungseinrichtung ausgefallen ist oder aufgrund eines während einer Selbstdiagnose oder einer externen Diagnose festgestellten Fehlers deaktiviert worden ist.

Eine vorteilhafte Ausgestaltung der Erfindung zeichnet sich dadurch aus, dass die Steuerungseinrichtung eine Strommesseinrichtung beinhaltet und durch die Strommesseinrichtung ein Stromfluss in den n Verbindungsleitungen erfasst wird. Gemäß einer besonders vorteilhaften Weiterbildung der Erfindung ist vorgesehen, dass, wenn der erfasste Stromfluss einen Grenzwert überschreitet, die Steuerungseinrichtung unmittelbar und/oder mittelbar über das Logikelement den Wechselrichter in einen spannungsfreien Zustand schaltet. Hierdurch wird der Synchronmotor vor extremen Betriebssituationen geschützt, die den Synchronmotor beschädigen oder sogar zerstören könnten. Für den Fall, dass die Steuerungseinrichtung den Wechselrichter mittelbar über das Logikelement in einen spannungsfreien Zustand schaltet, ist das Logikelement derart ausgestaltet, dass es wenigstens ein Notsteuersignal ausgeben kann, welches den Wechselrichter derart ansteuert, dass in den n Motorwicklungen des Synchronmotors ein spannungsfreier Zustand erreicht wird.

Eine bevorzugte Weiterbildung der Erfindung beinhaltet, dass das Ausgangssignal des Positionssensors der Steuerungseinrichtung zugeführt wird, basierend auf dem Ausgangssignal des Positionssensors durch die Steuerungseinrichtung ein Geschwindigkeitssignal berechnet wird und das Geschwindigkeitssignal über einen Ausgang ausgegeben wird. Auf diese Weise kann die Winkelgeschwindigkeit des Rotors des Synchronmotors berechnet und beispielsweise an eine übergeordnete Steuerungseinheit, wie z. B. die Steuerungseinheit der gesamten Windenergieanlage, ausgegeben werden.

Bei einer bevorzugten Ausgestaltung der Erfindung ist vorgesehen, dass der Positionssensor über n Signalleitungen mit dem Logikelement verbunden ist und über jede der n Signalleitungen ein Teilausgangssignal dem Logikelement zugeführt wird, wobei jedes der n Teilausgangssignale drei verschiedene Zustände annehmen kann. Eine derartige Ausgestaltung der Signalleitungen zwischen dem Positionssensor und dem Logikelement ist besonders vorteilhaft, da sich die Funktionsweise des anzusteuernden Wechselrichters in der Übertragungsart des Ausgangssignals widerspiegelt. Wird der Wechselrichter zum Beispiel durch einen H-Brückenwechselrichter gebildet, enthält jedes der Teilausgangssignale die Information, die notwendig ist um genau eine der Brücken des H-Brückenwechselrichters anzusteuern.

Im Einzelnen gibt es nun eine Vielzahl von Möglichkeiten, das erfindungsgemäße Antriebssystem, die erfindungsgemäße Wind- oder Wasserkraftanlage mit einem Pitchsystem und das erfindungsgemäße Verfahren zum Betrieb eines Antriebssystems auszugestalten und weiterzubilden. Dazu wird auf die dem Patentanspruch 1 nachgeordneten Patentansprüche sowie auf die nachfolgende detaillierte Beschreibung bevorzugter Ausführungsbeispiele der Erfindung unter Bezugnahme auf die Zeichnung verwiesen.

In der Zeichnung zeigt

Fig. 1 schematisch das erfindungsgemäße Antriebssystem gemäß einer bevorzugten Weiterbildung der Erfindung und

Fig. 2 ein erfindungsgemäßes Pitchsystem zur Verstellung des Pitchwinkels zumindest eines Rotorblattes einer Wind- oder Wasserkraftanlage.

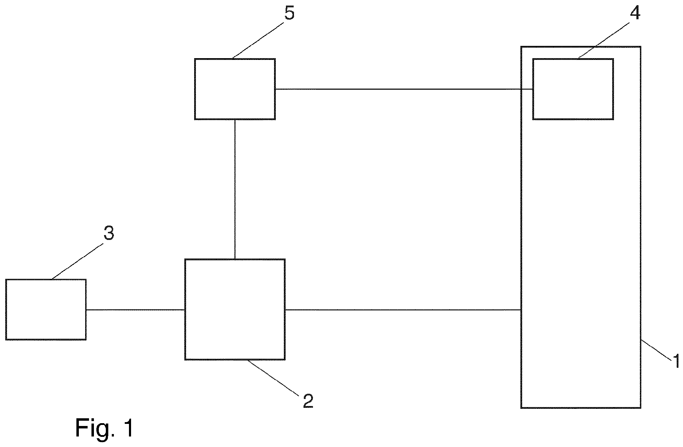

Die Fig. 1 zeigt das erfindungsgemäße Antriebssystem gemäß einer bevorzugten Weiterbildung der Erfindung mit einem Synchronmotor (1), einem Wechselrichter (2), einer Gleichspannungsquelle (3). Der Synchronmotor (1) weist hierbei einen Positionssensor (4) auf, durch den die Rotorposition, insbesondere die Winkelposition, des Rotors des Synchronmotors (1) erfassbar ist. Der Positionssensor (4) ist als integraler Bestandteil des Synchronmotors (1) ausgebildet. Ebenso ist jedoch auch eine Ausgestaltung des Positionssensors (4) als separates Bauteil denkbar, welches mit dem Synchronmotor (1) verbunden, beispielsweise auf die Motorwelle aufgesteckt, ist.

Zur Steuerung des Wechselrichters (2) ist ein Logikelement (5) vorgesehen. Durch den Positionssensor (4) ist ein Ausgangssignal ausgebbar, welches über eine Leitung dem Logikelement (5) zuführbar ist. Bei Empfang des Ausgangssignals des Positionssensors (4) ist durch das Logikelement (5) genau ein dem Ausgangssignal korrespondierendes Steuersignal erzeugbar. Dieses Steuersignal ist über Leitungen dem Wechselrichter (2) zuführbar. Der Wechselrichter (2) ist mit der Gleichspannungsquelle (3) verbunden und wird von der Gleichspannungsquelle (3) gespeist. Der Wechselrichter (2) ist über n Verbindungsleitungen mit dem Synchronmotor (1) verbunden. In der Fig. 1 sind die n Verbindungsleitung in einem n-adrigen Kabel zusammengefasst und somit nur als einfache Verbindung dargestellt.

Entsprechend der aktuellen Rotorposition des Rotors des Synchronmotors (1) gibt der Positionssensor (4) ein Ausgangssignal an das Logikelement (5) aus. Das Logikelement (5) erzeugt ein dem Ausgangssignal korrespondierendes Steuersignal und führt dieses dem Wechselrichter (2) zu. Durch dieses Steuersignal wird der Wechselrichter (2) gesteuert. Der Wechselrichter (2) stellt gemäß dem durch das Steuersignal ihm übermittelten Informationen Verbindungen her oder trennt Verbindungen zwischen den n Verbindungsleitungen und dem positiven bzw. dem negativen Potential der Gleichspannungsquelle (3). Sobald der Rotor des Synchronmotors (1) eine andere Rotorposition einnimmt und sich das Ausgangssignal des Positionssensors (4) ändert, ändert sich auch das vom Logikelement (5) korrespondierend zum Ausgangssignal erzeugte Steuersignal.

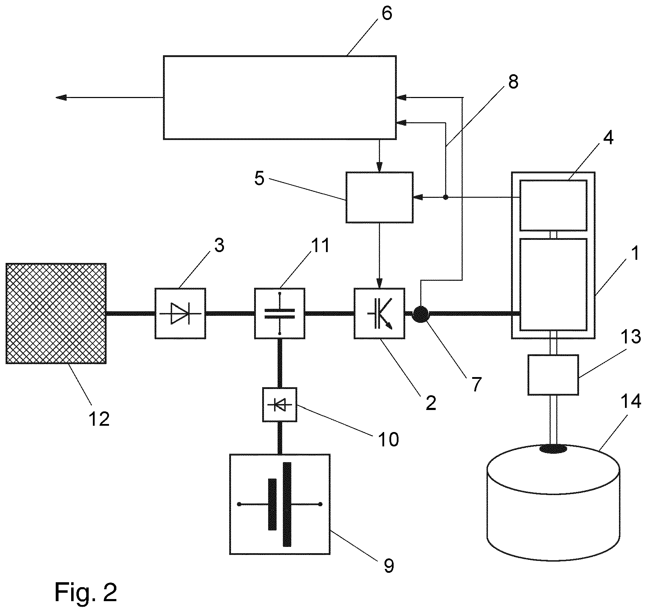

Der Fig. 2 ist ein erfindungsgemäßes Pitchsystem zur Verstellung des Pitchwinkels zumindest eines Rotorblattes einer Wind- oder Wasserkraftanlage zu entnehmen. Die Funktionsweise des in Fig. 2 dargestellten Pitchsystems basiert auf dem in Fig. 1 dargestellten Antriebssystem. Daher wird im Folgenden auf eine erneute Beschreibung gleicher Bauteile weitestgehend verzichtet. Zur Energieversorgung des Synchronmotors (1) ist der Synchronmotor (1) mit dem Wechselrichter (2) über n Verbindungsleitungen verbunden. Der Wechselrichter (2) wird von der Gleichspannungsquelle (3) gespeist, die durch einen Gleichrichter gebildet wird. Der Synchronmotor (1) weist einen Positionssensor (4) auf und ist mit dem Logikelement (5) verbunden. Des Weiteren ist eine Steuerungseinrichtung (6) vorgesehen. An den n Verbindungsleitungen zwischen dem Synchronmotor (1) und dem Wechselrichter (2) ist eine Strommesseinrichtung (7) angeordnet. Über diese Strommesseinrichtung (7) sind Informationen über den Stromfluss in den n Verbindungsleitungen erfassbar und der Steuerungseinrichtung (6) zuführbar. Für diesen Zweck ist die Steuerungseinrichtung (6) mit der Strommesseinrichtung (7) über Leitungen verbunden. Ferner ist die Steuerungseinrichtung (6) über eine Signalleitung (8) mit dem Positionssensor (4) verbunden. Über die Signalleitung (8) ist das Ausgangssignal des Positionssensors (4) der Steuerungseinrichtung (6) zuführbar. Ausgehend von dem Ausgangssignal des Positionssensors (4) kann die Steuerungseinrichtung (6) die Position des Rotors des Synchronmotors (1) sowie, nach Empfang von mehreren Ausgangssignalen, die Winkelgeschwindigkeit des Rotors des Synchronmotors (1) berechnen. Die Ergebnisse dieser Berechnungen sind von der Steuerungseinrichtung (6), insbesondere an andere Steuerungseinrichtungen der Windenergieanlage ausgebbar. Zur Energieversorgung des Wechselrichters (2) bei einem Ausfall der Gleichspannungsquelle (3) ist ein Notenergiespeicher (9) vorgesehen, dieser ist über eine oder mehrere Entkopplungsdioden (10) an den durch einen Kondensator gebildeten Zwischenkreis (11) angeschlossen. Der Notenergiespeicher (9) wird insbesondere benötigt, wenn das die Gleichspannungsquelle (3) speisende Stromnetz (12) und somit auch die Gleichspannungsquelle (3) ausfällt.

Der Synchronmotor (1) überträgt das von ihm erzeugte Drehmoment über ein Getriebe (13) auf ein Rotorblatt (14). Zur vereinfachten Darstellung ist lediglich ein Rotorblatt (14) dargestellt. Bei einer Windenergieanlage mit mehreren Rotorblättern kann der Synchronmotor (1) auch mehrere oder alle der Rotorblätter antreiben. Insbesondere ist es jedoch vorteilhaft, wenn für jedes Rotorblatt wenigstens ein eigener Synchronmotor (1), mit wenigstens einem Positionssensor (4), wenigstens einem Logikelement (5) und wenigstens einem Wechselrichter (2) vorgesehen ist. Die Gleichspannungsquelle (3), die Steuerungseinrichtung (6), der Notenergiespeicher (9) sowie der Zwischenkreiskondensator (11) können sowohl einfach als auch mehrfach, insbesondere wenigstens einmal für jedes Rotorblatt (14), vorgesehen sein.

## Bezugszeichenliste

1 Synchronmotor
2 Wechselrichter
3 Gleichspannungsquelle
4 Positionssensor

5    Logikelement
6    Steuerungseinrichtung
7    Strommesseinrichtung
8    Signalleitung
9    Notenergiespeicher
10   Enkopplungsdiode
11   Zwischenkreiskondensator
12   Netz
13   Getriebe
14   Rotorblatt

**Patentansprüche**

1. Antriebsystem mit einem Synchronmotor (1) mit n Motorwicklungen und mit einem Rotor, wobei n eine ganze Zahl größer eins ist, einer Gleichspannungsquelle (3) welche einem Wechselrichter (2) eine Gleichspannung zuführt, wobei der Wechselrichter (2) über n Verbindungsleitungen mit dem Synchronmotor (1) verbunden ist, sowie mit einem Positionssensor welcher entsprechend einer aktuellen Winkelposition des Rotors des Synchronmotors (1) ein Ausgangssignal an ein Logikelement (5) und das Logikelement (5) genau ein zum Ausgangssignal des Positionssensors korrespondierendes Steuersignal für den Wechselrichter (2) erzeugt, welches in einem Notbetrieb den Wechselrichter (2) derart ansteuert, dass wenigstens eine der n Verbindungsleitungen mit dem positiven Potential der Gleichspannungsquelle und wenigstens eine andere Verbindungsleitung der n Verbindungsleitungen mit dem negativen Potential der Gleichspannungsquelle (3) verbunden wird, wodurch in den n Motorwicklungen des Synchronmotors (1) ein spannungsbildender Zustand erreicht wird, wobei die Anzahl der verschiedenen erzeugbaren Steuersignale der vollständigen Anzahl von $3^n - 2^{n+1} + 1$ spannungsbildenden Zustände entspricht.

2. Antriebssystem nach Anspruch 1, **dadurch gekennzeichnet, dass** das Antriebssystem eine Steuerungseinrichtung (6) aufweist und der Wechselrichter (2) unmittelbar und/oder mittelbar über das Logikelement (5) durch die Steuerungseinrichtung (6) steuerbar ist.

3. Antriebssystem nach Anspruch 2, **dadurch gekennzeichnet, dass** die Steuerungseinrichtung (6) eine Strommesseinrichtung (7) beinhaltet und durch die Strommesseinrichtung (7) ein Stromfluss in den n Verbindungsleitungen erfassbar ist.

4. Antriebssystem nach Anspruch 2 oder 3, **dadurch gekennzeichnet, dass** das Ausgangssignal des Positionssensors (4) der Steuerungseinrichtung (6) zuführbar ist.

5. Antriebssystem nach einem der Ansprüche 1 bis 4, **dadurch gekennzeichnet, dass** n gleich drei ist.

6. Antriebssystem nach einem der Ansprüche 1 bis 5, **dadurch gekennzeichnet, dass** das Antriebssystem einen Notenergiespeicher (9) aufweist welcher in einem Notbetrieb die Gleichspannungsquelle (3) bildet.

7. Antriebssystem nach einem der Ansprüche 1 bis 5, **dadurch gekennzeichnet, dass** die Gleichspannungsquelle (3) durch einen Gleichrichter gebildet wird, der mit einer externen Wechselstromquelle verbindbar ist.

8. Antriebssystem nach einem der Ansprüche 1 bis 7, **dadurch gekennzeichnet, dass** der Wechselrichter (2) durch einen H-Brückenwechselrichter gebildet wird.

9. Wind- oder Wasserkraftanlage mit einem Pitchsystem zur Verstellung des Pitchwinkels zumindest eines Rotorblattes der Wind- oder Wasserkraftanlage, **dadurch gekennzeichnet, dass** das Pitchsystem ein Antriebssystem nach einem der Ansprüche 1 bis 8 aufweist.

10. Verfahren zum Betrieb eines Antriebssystems, **dadurch gekennzeichnet, dass** ein Antriebssystem nach einem der Ansprüche 1 bis 8 verwendet wird, wobei durch den Positionssensor (4) ein Ausgangssignal erzeugt wird, das Ausgangssignal dem Logikelement (5) zugeführt wird, das Logikelement (5) bei Empfang des Ausgangssignals genau ein dem Ausgangssignal korrespondierendes Steuersignal erzeugt, wobei die Anzahl der verschiedenen erzeugten Steuersignale $3^n-2^{n+1} + 1$ beträgt, das Steuersignal dem Wechselrichter (2) zugeführt wird, der Wechselrichter (2) durch das Steuersignal gesteuert wird, die Gleichspannungsquelle (3) dem Wechselrichter (2) eine Gleichspannung zuführt, die Gleichspannung durch den Wechselrichter (2) in eine n-phasige Wechselspannung umgewandelt wird und der Synchronmotor (1) mit der n-phasigen Wechselspannung betrieben wird.

11. Verfahren zum Betrieb eines Antriebssystems nach Anspruch 10, **dadurch gekennzeichnet, dass** das Antriebssystem eine Steuerungseinrichtung (6) aufweist und der Wechselrichter (2) durch die Steuerungseinrichtung (6) mittelbar über das Logikelement (5) und/oder unmittelbar gesteuert wird.

12. Verfahren zum Betrieb eines Antriebssystems nach Anspruch 11, **dadurch gekennzeichnet, dass** die Steuerungseinrichtung (6) eine Strommesseinrichtung (7) beinhaltet und durch die Strommesseinrichtung (7) ein Stromfluss in den n Verbindungsleitungen erfasst wird.

**13.** Verfahren zum Betrieb eines Antriebssystems nach Anspruch 12, **dadurch gekennzeichnet, dass**, wenn der erfasste Stromfluss einen Grenzwert überschreitet, die Steuerungseinrichtung (6) unmittelbar und/oder mittelbar über das Logikelement (5) den Wechselrichter (2) in einen spannungsfreien Zustand schaltet.

**14.** Verfahren zum Betrieb eines Antriebssystems nach einem der Ansprüche 10 bis 13, **dadurch gekennzeichnet, dass** der Positionssensor (4) über n Signalleitungen mit dem Logikelement (5) verbunden ist und über jede der n Signalleitungen ein Teilausgangssignal dem Logikelement (5) zugeführt wird, wobei jedes der n Teilausgangssignale drei verschiedene Zustände annehmen kann.

**Claims**

**1.** Drive system with a synchronous motor (1) having n motor windings and a rotor, wherein n is an integer greater than one; a direct voltage source (3) which supplies a direct voltage to an inverter (2), wherein the inverter (2) is connected to the synchronous motor (1) via n connecting lines; as well as with a position sensor which, in accordance with a current angular position of the rotor of the synchronous motor (1), generates an output signal to a logic element (5), and the logic element (5) generates precisely one control signal for the inverter (2), said control signal corresponding to the output signal of the position sensor and, in emergency operation, activating the inverter (2) in such a way that at least one of the n connecting lines is connected to the positive potential of the direct voltage source, and at least one other connecting line of the n connecting lines is connected to the negative potential of the direct voltage source (3), whereby in the n motor windings of the synchronous motor (1) a voltage-producing state is reached, wherein the number of different control signals that can be generated corresponds to the total number of $3^n - 2^{n+1} + 1$ voltage-producing states.

**2.** Drive system according to claim 1, **characterized in that** the drive system has a control device (6), and the inverter (2) can be controlled directly and/or indirectly via the logic element (5) by the control device (6).

**3.** Drive system according to claim 2, **characterized in that** the control device (6) comprises a current-measuring device (7), and a current flow in the n connecting lines can be detected by the current-measuring device (7).

**4.** Drive system according to claim 2 or 3, **characterized in that** the output signal of the position sensor (4) can be supplied to the control device (6).

**5.** Drive system according to any of claims 1 to 4, **characterized in that** n equals three.

**6.** Drive system according to any of claims 1 to 5, **characterized in that** the drive system has an emergency power store (9) which, in emergency operation, forms the direct voltage source (3).

**7.** The drive system according to any of claims 1 to 5, **characterized in that** the direct voltage source (3) is formed by a rectifier which can be connected to an external alternating current source.

**8.** Drive system according to any of claims 1 to 7, **characterized in that** the inverter (2) is formed by an H-bridge inverter.

**9.** Wind power plant or water power plant with a pitch system for adjusting the pitch angle of at least one rotor blade of the wind power plant or water power plant, **characterized in that** the pitch system has a drive system according to any of claims 1 to 8.

**10.** Method for operating a drive system, **characterized in that** a drive system according to any of claims 1 to 8 is used, wherein an output signal is generated by the position sensor (4); the output signal is supplied to the logic element (5); upon receiving the output signal, the logic element (5) generates precisely one control signal corresponding to the output signal, wherein the number of different generated control signals is $3^n - 2^{n+1} + 1$; the control signal is supplied to the inverter (2); the inverter (2) is controlled by the control signal; the direct voltage source (3) supplies a direct voltage to the inverter (2); the direct voltage is converted by the inverter (2) into an n-phase alternating voltage; and the synchronous motor (1) is operated with the n-phase alternating voltage.

**11.** Method for operating a drive system according to claim 10, **characterized in that** the drive system has a control device (6), and the inverter (2) is controlled by the control device (6) indirectly via the logic element (5) and/or directly.

**12.** Method for operating a drive system according to claim 11, **characterized in that** the control device (6) comprises a current-measuring device (7), and a current flow in the n connecting lines is detected by the current-measuring device (7).

**13.** Method for operating a drive system according to claim 12, **characterized in that** the control device (6) switches the inverter (2) into a voltage-free state indirectly via the logic element (5) and/or directly if the detected current flow exceeds a threshold value.

14. Method for operating a drive system according to any of claims 10 to 13, **characterized in that** the position sensor (4) is connected to the logic element (5) via n signal lines, and a partial output signal is supplied to the logic element (5) via each of the n signal lines, wherein each of the n partial output signals can assume three different states.

**Revendications**

1. Système d'entraînement comprenant un moteur synchrone (1) comprenant n enroulements moteur et un rotor, n étant un nombre entier supérieur à un, une source de tension continue (3) qui alimente en tension continue un onduleur (2), l'onduleur (2) étant relié au moteur synchrone (1) par le biais de n conduites de raccordement, ainsi qu'un capteur de position, qui produit, de manière correspondant à une position angulaire réelle du rotor du moteur synchrone (1), un signal de sortie vers un élément logique (5) et l'élément logique (5) produit exactement un signal de commande correspondant au signal de sortie du capteur de position pour l'onduleur (2), qui, dans un mode de secours, commande l'onduleur (2) de sorte qu'au moins une des n conduites de raccordement soit reliée au potentiel positif de la source de tension continue et au moins une autre conduite de raccordement des n conduites de raccordement soit reliée au potentiel négatif de la source de tension continue (3), moyennant quoi, dans les n enroulements moteur du moteur synchrone (1), un état de formation de tension est atteint, le nombre des différents signaux de commande pouvant être produits correspondant au nombre total d'états de formation de tension de $3^n - 2^{n+1} + 1$.

2. Système d'entraînement selon la revendication 1, **caractérisé en ce que** le système d'entraînement présente un dispositif de commande (6) et l'onduleur (2) peut être commandé directement et/ou indirectement par le biais de l'élément logique (5) par le dispositif de commande (6).

3. Système d'entraînement selon la revendication 2, **caractérisé en ce que** le dispositif de commande (6) contient un dispositif de mesure de courant (7) et un flux de courant dans les n conduites de raccordement peut être déterminé par le dispositif de mesure de courant (7).

4. Système d'entraînement selon la revendication 2 ou 3, **caractérisé en ce que** le signal de sortie du capteur de position (4) peut être transmis au dispositif de commande (6).

5. Système d'entraînement selon une des revendications 1 à 4, **caractérisé en ce que** n est égal à trois.

6. Système d'entraînement selon une des revendications 1 à 5, **caractérisé en ce que** le système d'entraînement présente un accumulateur d'énergie de secours (9) qui forme la source de tension continue (3) en mode de secours.

7. Système d'entraînement selon une des revendications 1 à 5, **caractérisé en ce que** la source de tension continue (3) est formée par un redresseur, qui peut être raccordé à une source de courant alternatif externe.

8. Système d'entraînement selon une des revendications 1 à 7, **caractérisée en ce que** l'onduleur (2) est formé par un onduleur à pont en H.

9. Éolienne ou hydrolienne dotée d'un système de pas pour le réglage de l'angle de pas d'au moins une pale de rotor de l'éolienne ou de l'hydrolienne, **caractérisée en ce que** le système de pas présente un système d'entraînement selon une des revendications 1 à 8.

10. Procédé pour l'exploitation d'un système d'entraînement, **caractérisé en ce qu'**un système d'entraînement selon une des revendications 1 à 8 est utilisé, dans lequel un signal de sortie est produit par le capteur de position (4), le signal de sortie est transmis à l'élément de logique (5), l'élément de logique (5), à réception du signal de sortie, produit exactement un signal de commande correspondant au signal de sortie, dans lequel le nombre de signaux de commande produits différents est de $3^n - 2^{n+1} + 1$, le signal de commande est transmis à l'onduleur (2), l'onduleur (2) est commandé par le signal de commande, la source de tension continue (3) transmet une tension continue à l'onduleur (2), la tension continue est transformée par l'onduleur (2) en une tension alternative à n phases et le moteur synchrone (1) est entraîné par la tension alternative à n phases.

11. Procédé pour l'exploitation d'un système d'entraînement selon la revendication 10, **caractérisé en ce que** le système d'entraînement présente un dispositif de commande (6) et l'onduleur (2) est commandé par le dispositif de commande (6) indirectement par le biais de l'élément de logique (5) et/ou directement.

12. Procédé pour l'exploitation d'un système d'entraînement selon la revendication 11, **caractérisé en ce que** le dispositif de commande (6) contient un dispositif de mesure de courant (7) et un flux de courant dans les n conduites de raccordement est déterminé par le dispositif de mesure de courant (7).

**13.** Procédé pour l'exploitation d'un système d'entraînement selon la revendication 12, **caractérisé en ce que**, lorsque le flux de courant déterminé dépasse une valeur seuil, le dispositif de commande (6) commute directement et/ou indirectement par le biais de l'élément de logique (5) l'onduleur (2) dans un état exempt de tension.

**14.** Procédé pour l'exploitation d'un système d'entraînement selon une des revendications 10 à 13, **caractérisé en ce que** le capteur de position (4) est relié à l'élément de logique (5) par le biais de n conduites de signal et un signal de sortie partiel est transmis à l'élément de logique (5) par le biais de chacune des n conduites de signal, chacun des n signaux de sortie partiels pouvant prendre trois états différents.

Fig. 1

Fig. 2

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102009046883 A1
- EP 1217722 A